# EUROPÄISCHE PATENTSCHRIFT

(11) **EP 1 747 725 B1**
(45) Veröffentlichungstag und Bekanntmachung des Hinweises auf die Patenterteilung: **23.11.2011**
(21) Anmeldenummer: 06015001.8
(22) Anmeldetag: 19.07.2006
(51) Int. Cl.: A21C 11/16

(54) **Pressvorrichtung für eine Anlage zur Herstellung von Gebäckstangen**
Pressing device for an installation for making rod-shaped pastry products
Dispositif de pressage pour une installation de fabrication de produits de pâtisserie en forme de barre

(30) Priorität: 30.07.2005 DE 202005011986 U
(43) Veröffentlichungstag der Anmeldung: 31.01.2007
(73) Patentinhaber: Werner & Pfleiderer Industrielle Backtechnik GmbH, 71732 Tamm (DE)
(72) Erfinder: Horna, Marc, 74360 Ilsfeld (DE)
(74) Vertreter: Hofmann, Matthias

(56) Entgegenhaltungen:
- EP-A- 1 157 613
- DE-B4- 10 290 838
- GB-A- 1 171 480
- US-A- 4 748 031
- US-A- 5 670 185

## Beschreibung

Die Erfindung betrifft eine Pressvorrichtung für eine Anlage zur Herstellung von Gebäckstangen.

Eine derartige Pressvorrichtung ist durch offenkundige Vorbenutzung bekannt. Typen von Gebäckstangen, die mit Hilfe dieser Pressvorrichtung hergestellt werden können, sind insbesondere klassische Salzstangen, sogenannte Sticks. Es besteht kundenseitig der Bedarf nach einem größeren Variantenreichtum, was derartige Gebäckstangen angeht.

EP1157613 A zeigt eine Pressvorrichtung zur Herstellung von teigummantelten Lebensmitteln. Ein Extruder für Teig steht mit einer Außen-Ringdüse in Verbindung. Eine innerhalb der Außen-Ringdüse angeordnete Innendüse steht mit einem Füllmaterial-Extruder in Verbindung.

US 5 670 185 zeigt eine Pressvorrichtung zur Herstellung von teigummanteten Lebensmitteln mit Temperiereinrichtung und mehreren Düsen zum gleichzeitigen Auspressen mehrerer Stränge.

Aus der DE 102 90 838 B4 ist eine weitere Vorrichtung zur Herstellung teigummantelter Lebensmittel bekannt.

Es ist daher eine Aufgabe der vorliegenden Erfindung, eine Pressvorrichtung der eingangs genannten Art derart weiterzubilden, dass die Typenvielfalt an Gebäckstangen, die hiermit hergestellt werden können, deutlich erweitert ist.

Diese Aufgabe ist erfindungsgemäß gelöst durch eine Pressvorrichtung mit den im Kennzeichnungsteil des Anspruchs 1 angegebenen Merkmalen.

Erfindungsgemäß wurde erkannt, dass durch den Einsatz einer Düse mit einer Außen-Ringdüse und einer Innen-Düse gefüllte Gebäckstangen hergestellt werden können, wobei der Zusatzaufwand für die Pressvorrichtung sich in überraschend engen Grenzen hält. Wie Versuche der Anmelderin gezeigt haben, lassen sich verschiedene pastöse, pumpfähige und backfeste Massen als Füllmaterialien einsetzen. Beispiele hierfür sind Erdnussbutter, Konfitüre sowie Molkereiprodukte wie Joghurtmasse und Käsefüllung. Die erfindungsgemäße Pressvorrichtung ermöglicht die Herstellung einer Vielzahl von Gebäckstangenvarianten. Es ist insbesondere eine kontinuierliche Herstellung möglich. Die Temperiereinrichtung erlaubt eine gezielte Beeinflussung der Viskosität des Teigs und insbesondere des Füllmaterials. Es können dann Füllmaterialien zum Einsatz kommen, die bei Raumtemperatur keine optimal pastöse, pumpfähige Konsistenz haben.

Beim Einsatz einer Innen-Düse nach Anspruch 2 müssen nur geringe Modifikationen an der durch offenkundige Vorbenutzung vorbekannten Pressvorrichtung vorgenommen werden. Prinzipiell ist es möglich, bereits vorhandene Pressvorrichtungen nachzurüsten.

Eine Temperiereinrichtung nach Anspruch 3 kann mit geringem Aufwand realisiert werden.

Eine Düse aus einem Material nach Anspruch 4 ist lebensmittelecht, druckstabil und hat einen geringen Verschleiß. Die Außen-Ringdüse kann alternativ, genauso wie die Innen-Düse, aus Edelstahl gefertigt sein. Hierdurch kann die Oberflächenstruktur des ausgepressten Teig- bzw. Gebäckstrangs beeinflusst werden.

Ein Ausführungsbeispiel der Erfindung wird nachfolgend anhand der Zeichnung näher erläutert. In dieser zeigen:
- Fig. 1: schematisch einen Ausschnitt aus einer Anlage zur Herstellung von Gebäckstangen im Bereich einer Pressvorrichtung;
- Fig. 2: eine Ausschnittsvergrößerung aus Fig. 1.

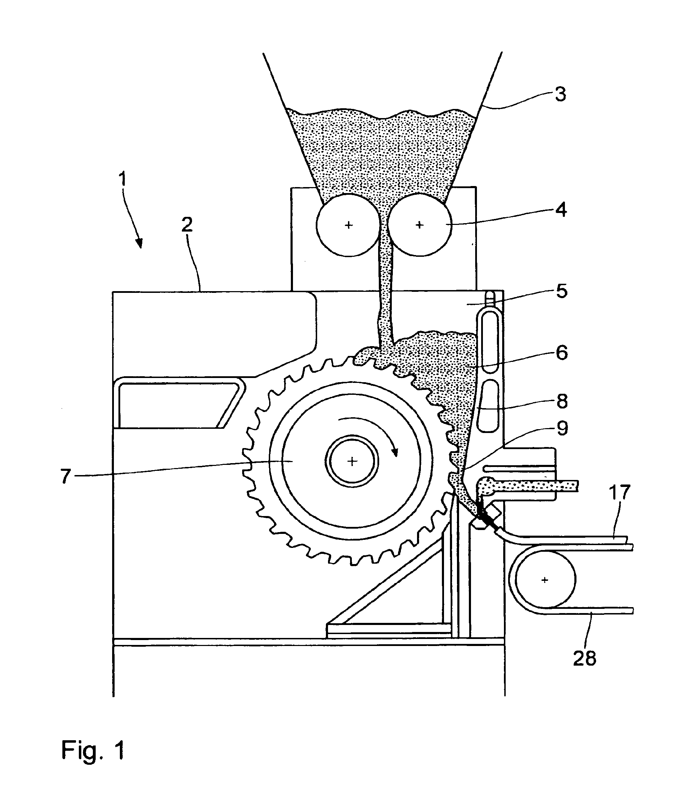

Eine in Fig. 1 schematisch dargestellte Pressvorrichtung 1 ist Teil einer ansonsten nicht dargestellten Anlage zur Herstellung von Gebäckstangen. Auf ein Maschinengehäuse 2 mit einem Maschinenrahmen der Pressvorrichtung 1 ist ein Zuführtrichter 3 aufgesetzt. Bodenseitig hat der Zuführtrichter 3 ein Förderwalzenpaar 4. Letzteres steht abgabeseitig mit einer Vorratskammer 5 für Teig 6 in Verbindung. Alternativ zu einer Beschickung der Pressvorrichtung über den Zuführtrichter 3 kann auch eine direkte manuelle Beschickung in die Vorratskammer 5 des Maschinengehäuses 3 erfolgen.

Unterhalb des Förderwalzenpaares 4 ist beiderseits am Maschinenrahmen gelagert als Druckerzeugungseinrichtung eine Riffelwalze 7 angeordnet. Aus der Blickrichtung nach Fig. 1 gesehen dreht sich die Riffelwalze 7 im Uhrzeigersinn. In einem Umfangsbereich, der in Fig. 1 in etwa einem oberen rechten Quadranten entspricht, steht die Riffelwalze 7 mit dem Teig 6 in der Vorratskammer 5 in Förderverbindung. Die Vorratskammer 5 verjüngt sich, in Fig. 1 nach links von der Riffelwalze 7 und nach rechts von einer druckstabilen Wand 8 begrenzt, nach unten. Über eine Engstelle 9 am Ort der stärksten Verjüngung steht die Vorratskammer 5 mit einer Teig-Druckkammer 10 in Verbindung, die sich in Fig. 1 von der Riffelwalze 7 aus nach rechts unten erstreckt. Im Bereich der Teig-Druckkammer 10 steht die Riffelwalze 7 weiterhin mit dem Teig 6 in Förderkontakt. Stromabwärts begrenzt ein stationäres Abstreif-Messer 11, welches der Riffelwalze 7 unter geringstem Spiel benachbart ist, die Teig-Druckkammer 10. Abgabeseitig steht die Teig-Druckkammer 10 mit einem Misch-Ringraum 12 in Verbindung. Letzterer weist abgabeseitig eine Auspressöffnung 13 auf, die begrenzt wird von der Innenwand einer Außen-Ringdüse 14. Im Misch-Ringraum 12 wird ein Außen-Gebäckstrang 15 vorgeformt.

Eine Düse 16 zum Auspressen eines Gebäckstrangs 17, aus dem im weiteren Verlauf der Herstellungsanlage die Gebäckstangen erzeugt werden, weist neben der Außen-Ringdüse 14 zusätzlich eine Innen-Düse 18 aus Edelstahl auf. Letztere mündet von oben her, also in Bezug auf die Teigförderrichtung in der Teig-Druckkammer 10 seitlich, in die Teig-Druckkammer 10 ein. Ein Eingangsabschnitt 19 der Innen-Düse 18 geht über einen Umlenk-Abschnitt 20 in einen Abgabe-Abschnitt 21 über. Der Abgabe-Abschnitt 21 ist koaxial zum Misch-Ringraum 12 und zur Außen-Ringdüse 14 angeordnet. Ein Abgabeende 22 der Innen-Düse ist innerhalb der Außen-Ringdüse 14 angeordnet. Aus dem Abgabeende 22 wird ein Füllstrang 23, der Teil des Gebäckstrangs 17 ist, zur Füllung des Außen-Gebäckstrangs 15 ausgepresst.

Eingangsseitig steht die Innen-Düse 18 mit einer Füllmaterial-Druckkammer 24 in Verbindung.

Die Außen-Ringdüse 14 ist aus einem Kunststoffmaterial, insbesondere aus Teflon, gefertigt.

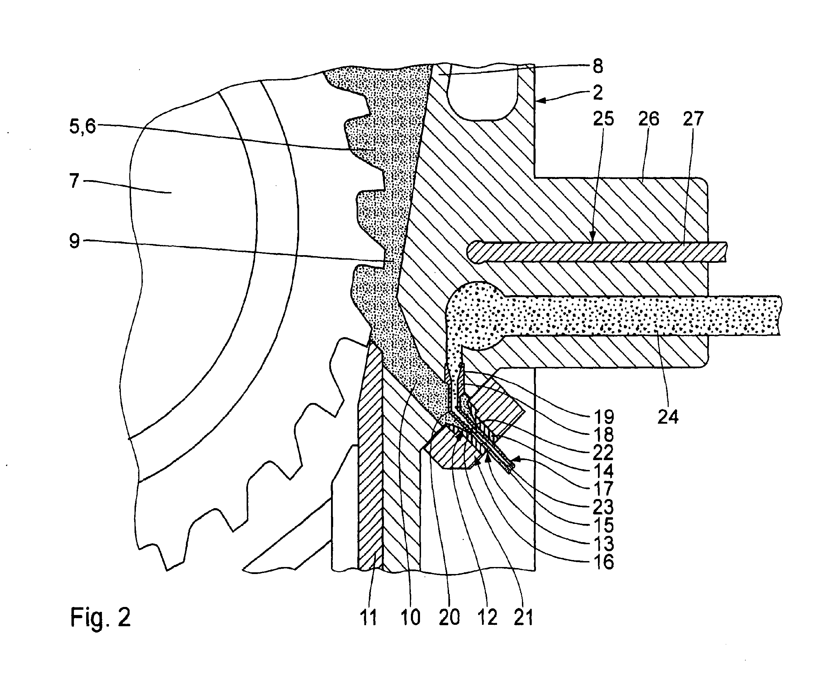

Zur Temperierung des Teigs in der Füllmaterial-Druckkammer 24 und gegebenenfalls auch in der Teig-Druckkammer 10 dient eine Temperiereinrichtung 25. Letztere ist in einem seitlichen Gehäuseabschnitt 26 des Maschinengehäuses 2 angeordnet. Die Temperiereinrichtung 25 hat einen in Fig. 2 horizontal verlaufenden Temperierkanal 27, der mit Wasser als Temperierfluid gefüllt ist. Mit Hilfe eines nicht in der Zeichnung dargestellten Temperiermoduls kann das Temperierfluid geheizt und/oder gekühlt werden. Mit Hilfe eines ebenfalls nicht in der Zeichnung dargestellten Pumpmoduls kann das Temperierfluid durch den Temperierkanal 27 gepumpt werden. Der Temperierkanal 27 ist der Füllmaterial-Druckkammer 24 benachbart.

Als Füllmaterial kommt eine pastöse, pumpfähige und backfeste Masse zum Einsatz. Beispiele hierfür sind Erdnussbutter, Konfitüre sowie Molkereiprodukte wie Joghurtmasse oder Käsefüllung. Der ausgepresste Gebäckstrang 17 wird von einem angetriebenen Endlos-Förderband 28 zum Backen des Gebäckstrangs weitertransportiert. Neben einem Backofen weist die Anlage zur Herstellung der Gebäckstangen noch eine Abkühl- und Verpackungseinrichtung auf.

Mit der Anlage können insbesondere gefüllte Salzstangen bzw. Sticks hergestellt werden.

Senkrecht zur Zeichenebene der Fig. 1 und 2 sind hintereinander eine Mehrzahl gleichartig aufgebauter Düsen 16 vorgesehen, die alle mit der Teig-Druckkammer 10 einerseits und der Füllmaterial-Druckkammer 24 andererseits in Verbindung stehen. Je nach Anzahl der Düsen 16 kann mit der Pressvorrichtung 1 eine entsprechende Anzahl von Gebäcksträngen 17 gleichzeitig ausgepresst und mit dem Endlos-Förderband 28 weitergefördert werden.

## Patentansprüche

1. Pressvorrichtung (1) für eine Anlage zur Herstellung von Gebäckstangen
- mit einer Vorratskammer (5) für Teig (6),
- mit mindestens einer Düse (16) zum Auspressen eines Gebäckstrangs (17), die eingangsseitig mit der Teig-Druckkammer (10) in Verbindung steht,
wobei die Düse (16) aufweist:
- eine Außen-Ringdüse (14) zum Auspressen eines Außen-Gebäckstrangs (15),
- eine mit ihrem Abgabeende (22) innerhalb der Außen-Ringdüse (14) angeordnete Innen-Düse (18), die eingangsseitig mit einer Füllmaterial-Druckkammer (24) in Verbindung steht, zum Auspressen eines Füllstrangs (23) zur Füllung des Außen-Gebäckstrangs (15),
**gekennzeichnet durch**
- eine Druckerzeugunseinrichtung (7) zur Erzeugung von Druck in einer Teig-Druckkammer (10), die mit der Vorratskammer (5) in Verbindung steht, wobei eine Riffelwalze (7) als beiderseits an einem Maschinenrahmen der Pressvorrichtung (1) gelagerte Druckerzeugungseinrichtung dient,
- eine Temperiereinrichtung (25) zur Temperierung des Teigs (6) in der Teig-Druckkammer (10) und/oder des Füllmaterials in der Füllmaterial-Druckkammer (24),
- eine Mehrzahl gleichartig aufgebauter Düsen (16), die parallel zu einer Drehachse der Riffelwalze (7) hintereinander angeordnet sind.

2. Pressvorrichtung nach Anspruch 1, **dadurch gekennzeichnet, dass** die Innen-Düse (18) seitlich in die Teig-Druckkammer (10) einmündet, wobei ein Eingangs-Abschnitt (19) der Innen-Düse (18) über einen Umlenk-Abschnitt (20) in einen Abgabe-Abschnitt (21) der Innen-Düse (18) übergeht.

3. Pressvorrichtung nach Anspruch 1 oder 2, **dadurch gekennzeichnet, dass** die Temperiereinrichtung (25) einen mit einem Temperierfluid befüllbaren Temperierkanal (27) benachbart zur Füllmaterial-Druckkammer (24) aufweist.

4. Pressvorrichtung nach einem der Ansprüche 1 bis 3, **dadurch gekennzeichnet, dass** die Außen-Ringdüse (14) aus einem Kunststoffmaterial, insbesondere aus Teflon, gefertigt ist.

## Claims

1. Pressing device (1) for an installation for the production of elongated baking products
- with a storage chamber (5) for dough (6),
- with at least one nozzle (16) for pressing out an elongated baking product (17), which is connected on the input side to the dough pressure chamber (10),
wherein the nozzle (16) comprises:
- an external tubular nozzle (14) for pressing out an external elongated baking product (15),
- an inner nozzle (18) arranged with its discharge end (22) inside the external tubular nozzle (14), which inner nozzle is connected on the input side to a filler material pressure chamber (24) for pressing out a filling strand (23) for filling the external elongated baking strand (15),
**characterised by**
- a pressure generating device (7) for generating pressure in a dough pressure chamber (10), which is in connection with the storage chamber (5), wherein a grooved roller (7) is used as a pressure generating device mounted on both sides on a machine frame of the pressing device (1),
- a tempering device (25) for tempering the dough (6) in the dough pressure chamber (10) and/or the filler material in the filler material pressure chamber (24),
- a plurality of similarly structured nozzles (16) which are arranged behind one another parallel to an axis of rotation of the grooved roller (7).

2. Pressing device according to claim 1, **characterised in that** the inner nozzle (18) discharges laterally into the dough pressure chamber (10), wherein an input section (19) of the inner nozzle (18) passes via a diverting section (20) into an output section (21) of the inner nozzle (18).

3. Pressing device according to claim 1 or 2, **characterised in that** the tempering device (25) comprises a tempering channel (27), which can be filled with a tempering fluid, adjacent to the filler material pressure chamber (24).

4. Pressing device according to one of claims 1 to 3, **characterised in that** the external tubular nozzle (14) is made from a plastic material, in particular Teflon.

## Revendications

1. Dispositif de pressage (1) pour une installation de fabrication de produits de pâtisserie en forme de barres
- comprenant une réserve (5) pour la pâte (6)
- comprenant au moins une buse (16) pour le pressage d'un produit de pâtisserie en barre (17), buse qui est en liaison, au niveau de son entrée, avec une chambre de compression de la pâte (10),
la buse (16) présentant :
- une buse annulaire externe (14) pour le pressage d'une partie externe du produit de pâtisserie en barre (15),
- une buse interne (18) disposée avec son extrémité d'amenée (22) à l'intérieur de la buse annulaire externe 14), buse interne qui est en liaison avec une chambre de compression de la matière de garnissage (24) au niveau de l'entrée, pour le pressage d'une barre de produit de garnissage (23) pour garnir la partie externe du produit de pâtisserie en barre (15),
**caractérisé par**
- un dispositif générant une pression (7) pour créer une pression dans la chambre de compression de la pâte (10) qui est en liaison avec la réserve (5), un rouleau d'ondulation (7) servant de dispositif générant une pression disposé sur les deux côtés d'un cadre de machine du dispositif de pressage (1),
- un dispositif de thermorégulation (25) pour régler la température de la pâte (6) dans la chambre de compression de la pâte (10) et/ou de la matière de garnissage dans la chambre de compression de la matière de garnissage (24),
- une multitude de buses de même conception (16) qui sont disposées les unes derrière les autres parallèlement à un axe de rotation du rouleau d'ondulation (7).

2. Dispositif de pressage selon la revendication 1 **caractérisé en ce que** la buse interne (18) débouche latéralement dans la chambre de compression de la pâte (10), une portion d'entrée (19) de la buse interne (18) dépassant une portion de déviation (20) dans une portion d'amenée (21) de la buse interne (18).

3. Dispositif de pressage selon les revendications 1 ou 2 **caractérisé en ce que** le dispositif de thermorégulation (25) présente une canalisation de thermorégulation (27) pouvant être remplie avec un fluide de thermorégulation, au voisinage de la chambre de compression de la matière de garnissage (24).

4. Dispositif de pressage selon l'une des revendications de 1 à 3 **caractérisé en ce que** la buse annulaire externe (14) est fabriquée dans un matériau synthétique, en particulier en Téflon.
